# EUROPEAN PATENT APPLICATION

(11) **EP 4 693 106 A1**
(43) Date of publication of application: **11.02.2026**
(21) Application number: 24193935.4
(22) Date of filing: 09.08.2024
(51) Int. Cl.: G06N 3/049, G06N 3/063

(54) **DEVICE AND METHOD FOR GENERATING A CONTROL SIGNAL**

(71) Applicant: Fraunhofer-Gesellschaft zur Förderung der angewandten Forschung e.V., 80686 München (DE)
(72) Inventor: Kampa, Matthias, 91058 Erlangen (DE); Stoll, Andreas, 91058 Erlangen (DE)
(74) Representative: König, Andreas Rudolf

(57) **Abstract**

A device for providing a control signal based on a task comprises a neuromorphic unit to operate a spiking neural network, SNN, configured for providing an event signal based on the task. The device comprises a state machine configured for providing at least one discrete-valued variable length control signal based on the event signal.

## Description

The present invention relates to a device for providing a control signal and to a method for generating a control signal. The present invention in particular relates to generating of control signals of variable length using spiking neural networks and neuromorphic hardware.

Spiking neural networks (SNNs) are artificial neural networks that consist of neurons with action-potential-like activation functions. Such spiking neurons generate activity in the form of pulses with uniform length. This greatly reduces the communication between the computational nodes (neurons) of the neural network and therefore allows energy-efficient information processing with low latency.

Consequently, SNNs have the potential to be deployed as robust, adaptive and programmable controllers with low latency while at the same time being energy efficient.

Executing SNNs on dedicated hardware accelerators or integrated circuits (ICs) are therefore a promising alternative to other control algorithms deployed on microprocessors or other kinds of ICs.

The pulse-based communication scheme within an SNN requires, in a direct use of the output, a high amount of switching activity for controlling a load, e.g., based on the output spikes.

The inventors found that although SNNs are promising solutions for obtaining results of a task, there is not yet available a promising solution to sufficiently exploit the advantages of spiking signals .

It is therefore desirable to make use of an SNN whilst providing for an efficient solution of using the output thereof.

An object of the present invention is therefore to provide for an efficient control by using spiking neural networks. This object is achieved by the subject matter as defined in the independent claims.

A recognition of the present invention is that by converting spikes of an SNN into a discrete-valued variable length signal, from which a pulse-width-modulated, PWM, signal is an example, the number of switching actions caused by the spikes of the SNN are considerably reduced and that such a discrete-valued variable length signal may be obtained in an efficient manner by use of a state machine, thereby The making available a promising solution to exploit efficient modulation schemes for generating discrete-valued variable length control signals.

According to an embodiment, a device for providing a control signal based on a task comprises a neuromorphic unit to operate a spiking neural network, SNN, configured for providing a spike signal based on the task. The device further comprises a state machine configured for providing at least one discrete-valued variable length control signal based on the spike signal.

According to an embodiment, the discrete-valued variable length control signal is a bang-bang control signal, e.g., a pulse-width-modulated, PWM, signal. This allows for a simple generation and a high compatibility of the signal.

According to an embodiment, the state machine is configured for switching between a plurality of states and for providing the at least one discrete-valued variable length control signal with a plurality of signal amplitudes, wherein each signal amplitude of the plurality of signal amplitudes is associated with one of the plurality of states. This allows for an efficient control as the state machine may provide for a continuous output signal based on its state and a switching to a different signal amplitude based on a different state of the state machine may be sufficient so that a high number of spikes may cause no switching operation which allows for a high efficiency.

According to an embodiment, the state machine is configured for switching from a first state to a second state to thereby change an amplitude of the at least one discrete-valued variable length control signal based on the spike signal. The state machine is configured for operating as a buffer unit for buffering the second state. This allows to avoid input that causes the state machine to again change its state and to maintain a state in the meantime.

According to an embodiment, the state machine comprises at least one of a flip-flop unit and a shift register. Those units may be implemented with a low amount of resources in software and/or hardware.

According to an embodiment, the state machine is adapted for providing the at least one discrete-valued variable length control signal with a time width of a value of the discrete-valued variable length signal that is associated with a time between spikes provided by a predefined set of output neurons of the SNN to different inputs of the state machine. This allows to switch between different states when receiving spikes on different inputs to efficiently generate the control signal.

According to an embodiment, the SNN comprises a plurality of output neurons, each output neuron configured for firing a spike at an output of the neuron based on a spiking condition. A first output of a first output neuron and a second output of a different second output neuron are connected with the state machine. This allows to control the state machine based on different output neurons of the SNN.

According to an embodiment, the first output and the second output are connected to a same terminal of the state machine which allows to accumulate information from different neurons, e.g., according to a logical OR but not limited hereto. Alternatively or in addition, two output are connected to different terminals of the state machine which allows to toggle between different information contained in the control signal based on the different output neurons.

According to an embodiment, the first output is connected to a set terminal of a flip-flop unit of the state machine. A first spike received from the first output causes a first state of the state machine and a first state of the at least one discrete-valued variable length control signal. A second spike received from the second output causes a second state of the state machine, e.g., received at a reset terminal of a flip-flop unit and a second state of the at least one discrete-valued variable length control signal. Thereby, the number of spikes that cause a change in the state of the control signal may be kept low.

According to an embodiment, the state machine is one of a plurality of state machines, each state machine of the plurality of state machines configured for receiving spikes from at least one neuron of the SNN. This allows to generate a complex control signal structure.

According to an embodiment, the neuromorphic unit and the state machine form at least a part of an integrated circuit which allows to provide for small and efficient units.

According to an embodiment, the state machine is configured to receive a control signal from a signal source externally from the SNN and to provide the at least one discrete-valued variable length control signal based on the control signal and based on the spike signal. This allows to combine information of different sources, the SNN and the signal source external of the SNN.

According to an embodiment, a system comprises a device as described herein and a controlled device configured for receiving the at least one discrete-valued variable length control signal and to operate accordingly. This allows to sufficiently control the controlled device in a system.

According to an embodiment, the controlled device comprises at least one of a motor, a data encoder, a unit for enabling/disabling operation of an active unit, an inverter, a filter for filtering the control signal, an actuator such as a speaker and an optical device.

According to an embodiment, a method for generating at least one discrete-valued variable length control signal comprises using a spiking neural network, SNN, to solve a task. The method further comprises converting spikes generated with the SNN to the at least one discrete-valued variable length control signal using a state machine.

Further advantageous modifications may be defined in the dependent claims.

Advantageous embodiments of the present invention are described in the following whilst making reference to the accompanying drawings in which:
- Fig. 1: shows a schematic block diagram of a device according to an embodiment;
- Fig. 2: shows a schematic block diagram of a device according to an embodiment having a state machine comprising a flip-flop unit;
- Fig. 3a: shows a schematic block diagram of a part of a device accordingly to an embodiment where three or more output neurons are implemented to provide for the spike signals;
- Fig. 3b: shows a schematic block diagram of a part of a device according to an embodiment where a state machine comprises two terminals;
- Fig. 3c: shows a schematic block diagram of a part of a device according to an embodiment where terminals of a state machine are each connected with an output of an output neuron;
- Fig. 4: shows a schematic diagram for explaining details about the control signal as a discrete-valued variable length control signal according to an embodiment;
- Fig. 5: shows a schematic block diagram of a system according to an embodiment that relates to motor control;
- Fig. 6: shows a schematic block diagram of a system according to an embodiment that relates to a control of communication frontends;
- Fig. 7: shows a schematic block diagram of a system according to an embodiment that relates to data packet encoding;
- Fig. 8: shows a schematic block diagram of system according to an embodiment, the system relating to a control of a DC-DC converter;
- Fig. 9: shows a schematic block diagram of a system according to an embodiment that may form a part of a class D amplification system; and
- Fig. 10: shows a schematic flowchart of a method according to an embodiment that may be used to generate at least one discrete-valued variable length control signal.

Equal or equivalent elements or elements with equal or equivalent functionality are denoted in the following description by equal or equivalent reference numerals even if occurring in different figures.

In the following description, a plurality of details is set forth to provide a more thorough explanation of embodiments of the present invention. However, it will be apparent to those skilled in the art that embodiments of the present invention may be practiced without these specific details. In other instances, well known structures and devices are shown in block diagram form rather than in detail in order to avoid obscuring embodiments of the present invention. In addition, features of the different embodiments described hereinafter may be combined with each other, unless specifically noted otherwise.

In many applications, the electronic circuit that drives a load such as a three-phase motor driver is typically controlled by current pulses of variable length. Control signals of variable length, e.g., pulse-with-modulation (PWM) signals, significantly increase the energy efficiency of the control system over control signals of uniform length like pulse-frequency-modulation (PFM) signals. This is because PWM significantly reduces the required amount of signal switching over PFM and switching a signal between different current levels inevitably consumes energy.

For that reason, embodiments described herein relate to PWM signals whilst the invention is not limited to such an implementation of discrete-valued variable length control signals. The present invention allows to obtain discrete-valued variable length control signals that may comprise two or more discrete states, wherein a signal comprising two discrete states may also be referred to as a bang-bang signal. A PWM signal is an example of a bang-bang signal, wherein it is possible, in connection with the present invention, that switching between two or more discrete states is performed within a cycle, comparable to a cycle time of a PWM signal, wherein such a cycle time is an optional feature of the present invention. If desired, e.g., when controlling a motor or the like, the control signal may maintain at a discrete value until a different status of the control signal is required. This also applies to controlled devices that are switched on or off or are switched between different operating modes, where the operating modes are not necessarily linked to a cycle time.

The discrete-valued variable length control signal according to an embodiment may be understood as a control signal of discrete values as described above. Further, the duration of at least one state may be variable between different instances or time intervals, e.g., an ON-time of a PWM signal and/or an OFF time, possibly dependent from a cycle time being implemented or not. For example, a first state or amplitude may be obtained or set based on a first event received from or provided by a spiking neural network, SNN, and may be maintained until a different second event is provided by the SNN or until a time of a duty cycle of the control signal has lapsed or a different reset condition is applied. As the time of the condition may vary over time, the signal may be considered as a discrete-valued variable length control signal.

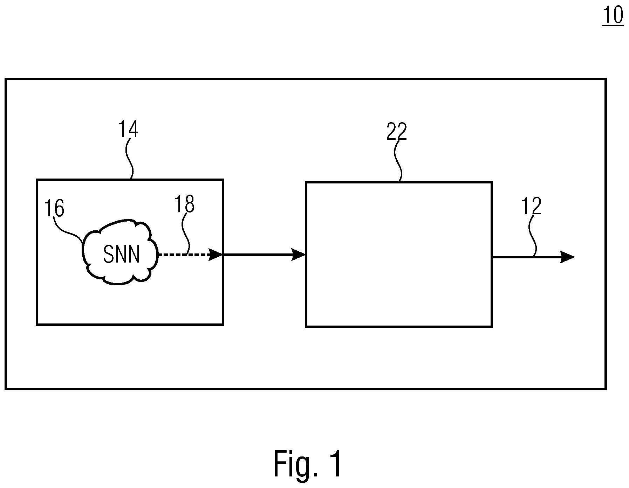

Fig. 1 shows a schematic block diagram of a device 10 according to an embodiment. Device 10 is configured for providing a control signal 12 based on a task. The task may be, for example, a control task or a different task such as a communication task or the like. The device comprises a neuromorphic unit 14 configured to operate a spiking neural network, SNN, 16 that is configured for providing a spike signal 18 based on the task. Such a spike signal may comprise so-called spikes, i.e., output signals of neurons of the SNN. Whilst making reference to the biologic reference of an SNN, the output neurons are considered to fire a spike which may be considered as an event that is possibly but not necessary of transient nature. Such a spike may be referred to as an event provided or indicated by the SNN. An alternative description for the event may be a pulse. Thus, when referring herein to an event, this may relate to a spike or a pulse provided by the SNN such that a spike described herein is an example of an event according to an embodiment. When referring herein to a spike provided this is to be understood as an event. The terms spike signal and event signal are, thus, used herein as synonyms.

Different implementations, variations or setups of an SNN may be used for embodiments of the present invention. The SNNs comprise one or more output neurons that are configured for providing a signal indicating one or more events, i.e., an event signal such as the spike signal having one or more events or spikes therein.

Events or spikes may be categorized, as an option, in view of their amplitude, their rate or a timing between spikes as well as a source, i.e., an output neuron, that provides for the spike. In connection with embodiments, the presence of the event, i.e., the spike itself, may be of importance whilst this does not necessarily lead to neglecting other parameters of the spike signal.

Device 10 further comprises a state machine 22 configured for providing the control signal and optionally further controlled signals. The control signal 12 is a discrete-value control signal that is based on the spike signal or event signal 18. That is, the spike signal 18 is converted by use of the state machine 22, in particular the spikes or signals derived therefrom are converted to the discrete-valued variable length control signal 12.

The state machine 22 may be implemented on a same or a different chip when compared to the neuromorphic unit 14. However, integrating both the neuromorphic unit 14 and the state machine 22 as at least a part of an integrated circuit allows for small and efficient devices.

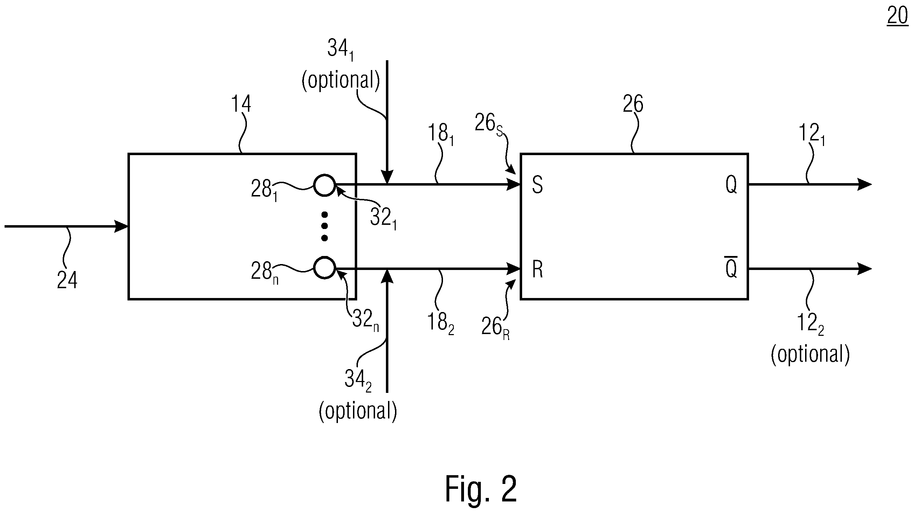

Fig. 2 shows a schematic block diagram of a device 20 according to an embodiment. Based on a task 24, the neuromorphic unit 14 is configured for providing spike signals 18₁ and 18₂ and possibly further spike signals to a state machine 26 that is implemented, for example, as a Flip-Flop unit. The Flip-Flop unit may be partially or completely implemented in software or hardware. For example, a Flip-Flop circuitry, i.e., hardware, may allow for a fast processing of spikes whilst a software implementation thereof may still allow to process comparably slow control tasks, such as a system level control e.g., on/off or the like, as a small delay is possibly of low importance.

Alternatively or in addition, a state machine according to embodiments may comprise a shift register, e.g., a binary shift register.

The Flip-Flop unit 26 may comprise a set-terminal 26_{S} and a reset-terminal 26_{R}. The Flip-Flop unit 26 may be configured for providing the discrete-valued variable length control signal 12₁ according to the state of the Flip-Flop unit. For example, when receiving a spike as part of the spike signal 18₁ at the set-terminal 26_{S}, an amplitude of the control signal 12₁ (labelled as Q) may be set to a first amplitude level, e.g., a high-level. This status may be maintained until an event is transmitted to the reset-terminal 26_{R} that resets, for example, the amplitude of the discrete-valued variable length control signal 12₁ to the former level. Thereby, any spikes or events received at the set-terminal 26_{S} prior to receiving an event at the reset-terminal 26_{R} may be received without causing a switching operation which allows to save energy and a low extent of using switching components.

As an option, a further discrete-valued variable length control signal 12₂ may be obtained from the Flip-Flop unit 26, e.g., being an inverted signal *Q̅*.

The Flip-Flop unit 26 as well as the state machine 22 may be configured for switching between a plurality, i.e., two or more states. A state machine described herein may be configured for providing the at least one discrete-valued variable length control signal with a plurality of signal amplitudes, from which a high-level and a low-level are examples only.

Each signal amplitude of the plurality of signal amplitudes may be associated with one, preferably exactly one of the plurality of states. In other words, the amplitude in control signal 12 of device 10 or the control signal 12₁ of device 20 may indicate the state of the state machine 22, 26, respectively.

According to embodiments, device 10 or 20 is implemented that the SNN comprises a plurality of output neurons 28₁ to 28ₙ with n > 1. Each output neuron 28₁ to 28ₙ may be configured for firing a spike at an output of the neuron based on a spiking condition as known for SNNs. A first output of a first output neuron 28₁ and a second output of a different second output neuron 28ₙ may be connected with the same state machine 22, 26, respectively. In device 20, the different outputs 32₁ and 32ₙ are connected with different terminals 26_{S} and 26_{R} of the state machine 26. However, this does not exclude to combine outputs 32 of two or more output neurons as an alternative or in addition thereto to combine the output information, events, obtained from a plurality of output neurons 28. That is, two or more outputs of a corresponding number of output neurons may be connected to a same terminal of the state machine or to different terminals of the state machine. As a further embodiment that may be implemented in addition or as an alternative, a neuron may be connected with different terminals of one or of different state machines. For example, spikes from an output neuron may switch between causing on states or off states or other different states of the state machine. For example, the SNN may be an online-learning SNNN incorporating some malleable delays.

In the example given in Fig. 2, the output 32₁ is connected to a set terminal 26s of the Flip-Flop unit 26 and a spike received from the output 32₁ causes a first state of the state machine and thereby a first state of the at least one discrete-value control signal 12₁. A different spike or event received from the output 32ₙ may cause a different second state of the state machine and a second state of the at least one discrete-valued variable length control signal.

As an optional implementation, spike signals 18₁ and/or 18₂ may be combined with external control signals 34₁, 34₂, respectively that allow to trigger a change of a state of the state machine, the Flip-Flop unit 26, respectively, based on an external source of the respective control signal 34₁, 34₂, respectively. This allows to provide the at least one discrete-valued variable length control signal 12₁ based on the control signals 34₁, 34₂, respectively, in combination with the spike signal 18₁, 18₂, respectively.

The state machine comprising a Flip-Flop unit 26 but also as different state machines such as comprising a shift register may be implemented to switch from a first state to a second state to thereby change an amplitude of the at least one discrete-valued variable length control signal based on the spike signal. The state machine may be configured for operating as a buffer unit for buffering the second state, e.g., until being instructed to change to a different state.

Embodiments are based on the finding that while the pulse-based communications scheme within a SNN is desired, the pulse-based output activity of a SNN is not directly applicable in regards to the above-mentioned PWM scheme. This ultimately limits the efficiency gains in the above-mentioned applications that benefit from or rely on PWM-based control or other bang-bang control signals, discrete-valued variable length control signals respectively.

The conversion of SNN output pulses with uniform length into pulses of variable length has not yet led to an applicable solution. Embodiments provide for such a solution allowing integrated SNN hardware accelerators.

When compared to known approaches, SNNs may be deployed for electric motor control. In a known approach according to [1] the native approach of controlling the motor driver directly with the SNN output pulses of uniform length is followed, i.e., by following a pulse-frequency modulation, PFM scheme. In [1] a system on a dedicated SNN hardware accelerator is proposed. Even though using PFM signals does not require a conversion of SNN output activity, energy is consumed with every generated output spike, i.e., current pulse, as transistors need to be switched with every spike. A higher spike frequency therefore inevitably leads to an unwanted higher number of gate switching and consequently to a higher number of power consumption.

A different approach as described in [2] relates to generating pulse-width-modulation, PWM, signals directly with a SNN. The proposed system is deployed on an FPGA board to control the speed of an electric motor as well as to control the luminous intensity of a LED. The PWM signal is generated by comparing the voltage of every output neuron against a predefined DC voltage level. While the membrane voltage is above the DC threshold, the PWM signal remains in the "on" state and is switched to "off" otherwise.

This approach for PWM signal generation, however, relies on tonic bursting behavior, i.e., the neurons illicit a sequence of many output spikes with short inter-spike intervals. Even though the authors translate tonic bursting into PWM signals, the effective SNN spiking behavior is not fundamentally different from the one present when following the PFM scheme: a long PWM signal is generated by many more output spikes, longer bursts, compared to a short PWM signal. In other words, the pulse width is effectively determined by the underlying spike/pulse frequency of the SNN in [2].

A hardware accelerator is also discussed in [3]. There, 49KB SRAM buffers (a SRAM cell contains a Flip-Flip unit or flip-flip element store a temporal average of a per-neuron membrane voltages of four non-spiking leaky-integrator output neurons. The output buffers thus are designed to be interfaced with external off-chip memory via a memory controller. With this design, a direct interface between SRAM buffer and, e.g., a motor driver is therefore not possible. Furthermore, the spiking neurons are digitally implemented and rely on discrete timesteps. This restricts the latency of SNN so as to deploy on such hardware. Further, the SRAM buffers are not considered as a state machine nor is [3] related to generating control signals.

Embodiment, in contrast to known approaches, allow the conversion of spikes/events generated in a spiking neural network into a discrete-valued variable length control signal such as a pulse-width-modulation and/or other bang-bang control signals and thereby generating efficient drive signals for various applications. The generated control signals can have variable length and the signal switching can occur with varied frequency.

Embodiments may be implemented by using buffer elements to retain "on" or "off" states - or other numbers or types of state - that are transmitted to drive elements by routing the SNN's output spikes to the buffer element, e.g., the set pin and the reset pin. A simple and very efficient implementation of such a buffer element is a Flip-Flop used to control IO cells of a neuromorphic chip as described, for example, in Fig. 2. A functionality may be similar to choosing the mode of an IO cell could be used to control the usage of the buffer elements versus allowing the IO to forward spikes directly. This may allow flexible usage of a neuromorphic chip IO depending on its application.

In other words, both the inverted and non-inverted output of the Flip-Flop could be usable to drive the IO's since both signals are needed in some applications like the driving of a half-bridge or a full-bridge of transistors. Instead of using standard IO cells, the implementation could also use gate drivers or even high power transistors. Instead of Flip-Flops, any other state machine could be used.

The events used to control the output state of the state machine do not need to be exclusively generated by the SNN itself, but could also be generated by external or integrated elements, e.g., a comparator used to generate a signal when a current limit is reached in the driver element or load. Such a signal may be considered as originating from an external control source. By using the dominant output of a Flip-Flop as input for this fail safe signal, the system may remain in a safe operating range, since incoming signals at the "on" pin of the IO will be ignored whenever the "off" state is triggered by an overcurrent.

The state machines output may also be fed back into the SNN to provide feedback for the current state and hence be used to integrate the constant inflow of current into a spiking neuron to trigger a switching of the state after a time adjustable by other inflows into the integrating neuron.

According to an embodiment, a device is provided, wherein an output of the state machine, e.g., the discrete-value control signal, is fed back as an input to the SNN.

In Fig. 2 an embodiment using and SNN processor and a Flip-Flop is shown. The neuromorphic unit, e.g., a SNN processors or a neuromorphic chip may execute a SNN that acts as controller by processing information using external stimuli and may emit spikes/events at one or more output neurons. A Flip-Flop element 26 may receive current pulses at the set(s) and reset (R) input connections. It may emit its state output Q and the inverted state output *Q̅*. The current pulses (spikes/events) received by the Flip-Flop unit or circuit may be generated either by some output neuron of the SNN processors or, optionally, other external or integrated elements, e.g., a comparator used to generate a signal when a current limit is reached at a load connected to the Flip-Flop output(s).

A PWM or other bang-bang control signal or a different discrete-valued variable length control signal is generated, at output Q of the Flip-Flop with respect to the input spikes/events at S and R respectively. The inverted signal of Q is generated at output *Q̅*.

The embodiment shown in Fig. 2 can be extended to any amount of Flip-Flop elements. The number of spiking neurons connected to the input S and R of a Flip-Flop unit may vary, but it may be sufficient to connect one dedicated output neuron per flop-flop input.

The state machine may be integrated in or connected to the neuromorphic hardware chip. Embodiments may be realized on one or more integrated circuits, i.e., a single chip, chiplets, or chips. Depending on the application, the state machine may be embedded in a consecutive system rather than the SNN processor as well, e.g., a Flip-Flop unit integrated together with a MOSFET gate driver rather than the SNN accelerator chip.

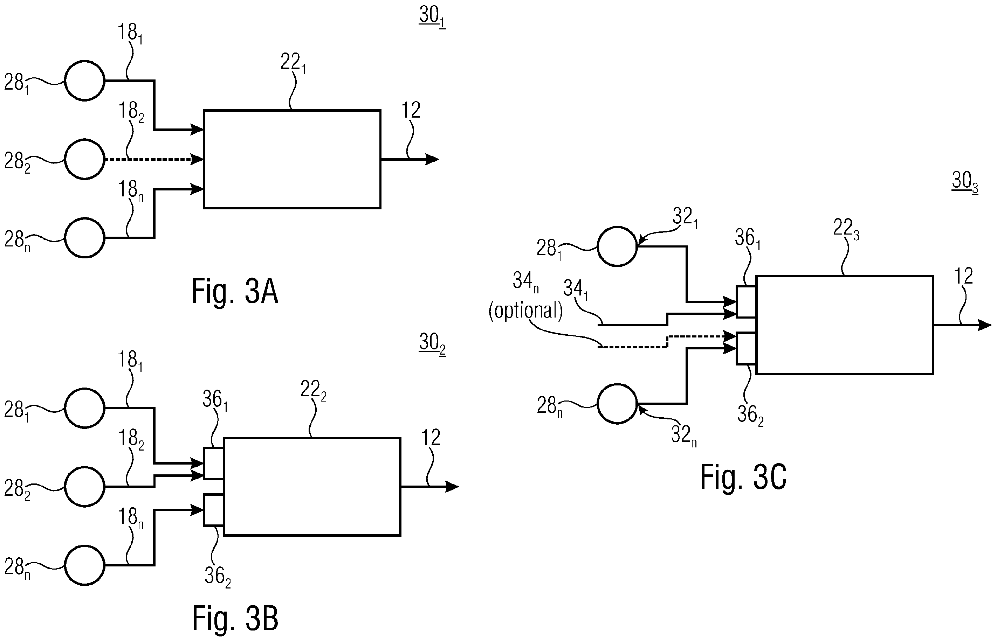

Fig. 3a shows a schematic block diagram of a part of a device 30₁ accordingly to an embodiment where three or more output neurons 28₁, 28₂ and 28ₙ are implemented to provide at least for the spike signals 18₁ and 18ₙ, optionally at least the spike signal 18₂, wherein state machine 22, may receive those signals and may switch between two or optionally three states that are represented in the control signal 12.

Fig. 3b shows a schematic block diagram of a part of a device 30₂ where a state machine 22₂ comprises two terminals 36₁ and 36₂, e.g., corresponding to the terminals 26s and 26_{R}, wherein terminal 36₁ may be configured for receiving spike signals 18₁ and 18₂ of two or more output neurons 28₁ and 28₂.

Fig. 3c shows a schematic block diagram of a part of a device 30₃ according to an embodiment where terminals 36₁ and 36₂ of a state machine 22₃ are each connected with an output 32₁, 32ₙ, respectively, of an output neuron 28₁, 28ₙ, respectively. Terminal 36₁ may be configured for receiving an external control signal 34₁ from an external source being external to the SNN comprising the output neurons 28₁ and 28ₙ. Optionally, terminal 36₂ may be configured for receiving an external control signal 34ₙ. In general none, one or a plurality of external control signals may be received. Different external control signals may be connected to a same or to different terminals of the state machine.

When compared to Fig. 2, both options are part of embodiments, to receive a signal being a combination of a spike signal and an external control signal at a terminal of the state machine, see Fig. 2, or to receive two or more signals at a same terminal, see Fig. 3b and Fig. 3c.

According to embodiments, a device may comprise more than a single state machine. For example, a plurality of state machines, e.g., at least two, at least three, at least five, at least ten or even a higher number, may be implemented in a device according to an embodiment. Each state machine of the plurality of state machines may be configured for receiving spikes from at least one neuron of the SNN. It is to be noted that an output of a neuron may be connected to more than a single state machine. This may be of advantage, for example, when generating more than a single control signal for one or several devices and to use a partial result of the SNN provided at an output neuron for more than a single control signal.

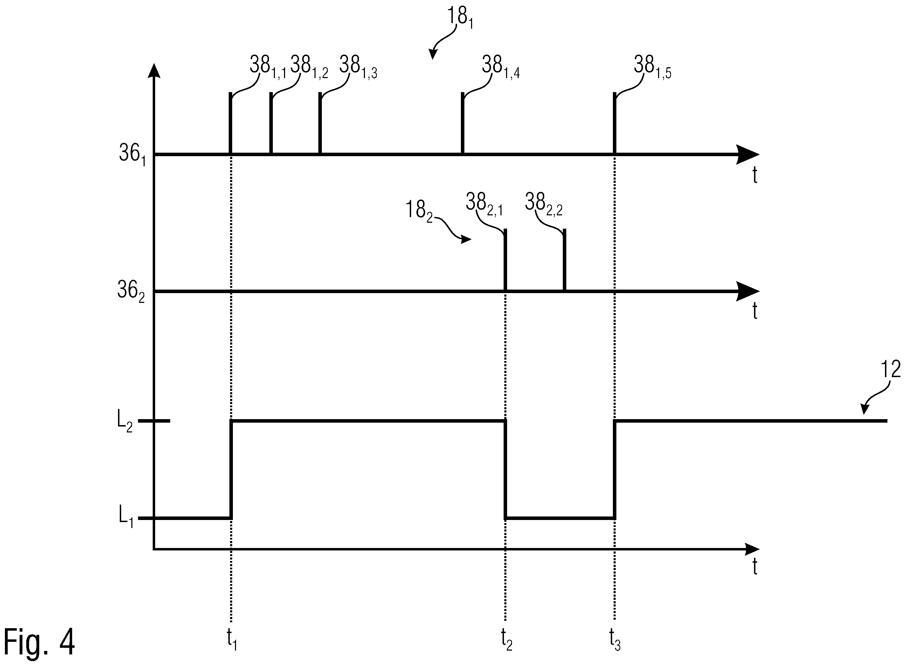

Fig. 4 shows a schematic diagram for further explaining details about the control signal as a discrete-valued variable length control signal. For example, the discrete-value control signal 12 is a bang-bang control signal, e.g., a PWM signal, a pulse-frequency-modulation, PFM, signal or a pulse-position-modulation, PPM, signal. Although defining an advantageous implementation, control signal 12 is not limited to comprise two amplitude values L₁ and L₂ only but may also comprise a higher number of amplitudes. Such numbers of amplitudes may be associated with different states of the state machine providing the output signal 12.

Whilst making reference to the non-limiting example of Fig. 2, spike signal 18, may be received at a first terminal 36₁, e.g., terminal 26_{S} and a different spike signal 18₂ may be received at a different terminal 36₂ of the state machine, e.g., terminal 26_{R} of Fig. 2.

Events or spikes 38_{i,j} are shown in Fig. 4 where parameter i relates to the corresponding terminal 36ᵢ and parameter j counts spikes received at the respective terminal i.

A spike or event 38_{1,1} received at terminal 36₁ may cause the state machine to change its state and to provide the control signal 12 with a signal amplitude L₂ being a discrete value, e.g., a high-level. Starting from t₁ in time further spikes 38_{1,2} and 38_{1,3} may possibly be without effect as no change in the state machine is caused. Same is true for pulse 38_{1,4}, possibly regardless in view of the amount of time between pulses or spikes received at terminal 36₁.

Upon reception of a spike 38_{2,1} at terminal 36₂, the state machine may change its state and, optionally, return to the state established prior to reception of spike 38_{1,1}. From the corresponding time t₂ the state machine may provide the output signal 12 with the former signal amplitude, e.g., a low-level or L₁. Subsequently, pulse 38_{2,2} may be without effect as described for spikes/pulses 38_{1,2}, 38_{1,3} and 38_{1,4}.

Pulse 38_{1,5} received at terminal 36₁ may, however, toggle the state machine to a respective state that corresponds to amplitude L₂ of control signal 12 from t₃ on.

It may be seen that although receiving plenty of spikes at terminals 36₁ and 36₂, a comparably low number of switching actions is used or necessary at the control signal due to neglecting a part of the spikes received.

A device in accordance with embodiments map comprise a state machine that is adapted for providing the at least one discrete-valued variable length control signal with a time width of a value of the discrete-valued variable length signal that is associated with a time between spikes provided by a predefined set of output neurons of the set of SNN to different inputs of the state machine. The control signal may, thus, comprises an optional independency from a number of spikes. For example, a time duration or a pulse width where control signal 12 is at amplitude level L₂, L₁, respectively may be based or even depend on a time lapsing between t₁ and t₂, t₂ and t₃ respectively where a possibly first pulse is received again at the other terminal. It is to be noted that filter structures or the like may be used, for example, to filter a first spike received to focus on a second spike or the like.

The signal structure shown in Fig. 4 may be enriched with additional functionality. For example, an external control signal as described, for example, in connection with Fig. 2, Fig. 3b or Fig. 3b may be used to reset the state machine or to provoke a predefined state of the state machine. Such a control signal may be generated, for example, using a clock to obtain a clock signal which allows to establish, for example, a PWM cycle or other predefined structures of the control signal 12. Such a cycle time may, as an alternative or in addition, be learnt by the SNN and may be modulated via events at the set pin and the reset pin of the, e.g., a Flip-Flop unit.

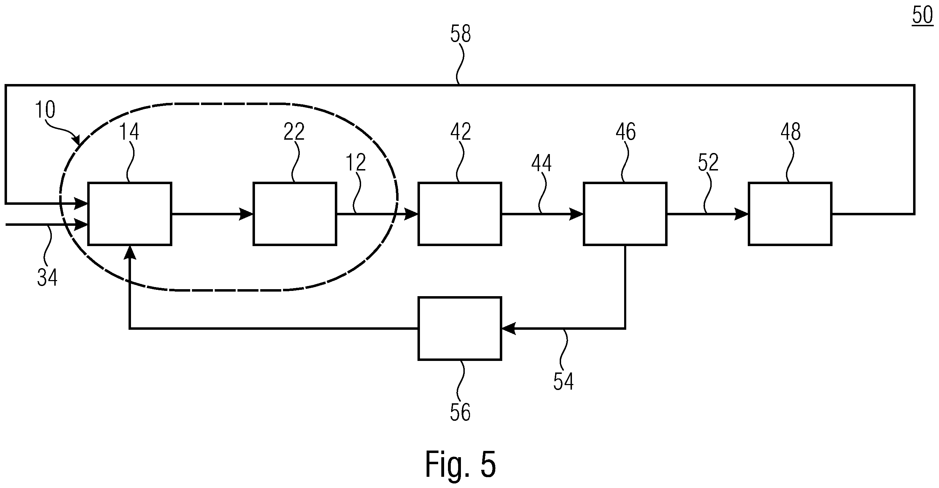

Fig. 5 shows a schematic block diagram of a system 50 according to an embodiment. System 50 comprises device 10 but may also comprise device 20 and/or 30. Beside the neuromorphic unit 14 and the state machine 22 a MOSFET gate driver 42 may be connected to the state machine to receive control signal 12 and to provide a power control signal 44 to a half-bridge circuit 46 that controls, for example a brushless DC (BLDC) motor 48 with a control signal 52 and that may provide an input signal 54 for an optional detector 56 that may provide for an additional input for the neuromorphic unit 14.

In other words, a SNN processor 14 may receive external inputs 34 as well as signals 58 from the BLDC motor 48 and from a voltage zero crossing detector 56. Based on these inputs, a SNN executed on neuromorphic unit 14 may emit spikes that are converted into, e.g., PWM control signals 12 via the state machine 22. The generated control signals 12 are passed to a MOSFET gate driver 42 that drives the BLDC motor 48 via a half-bridge 46 and, optionally, filters. The voltage zero crossing detector 56 may be used to provide the executed SNN a feedback signal based on the voltages present in the half-bridge 46.

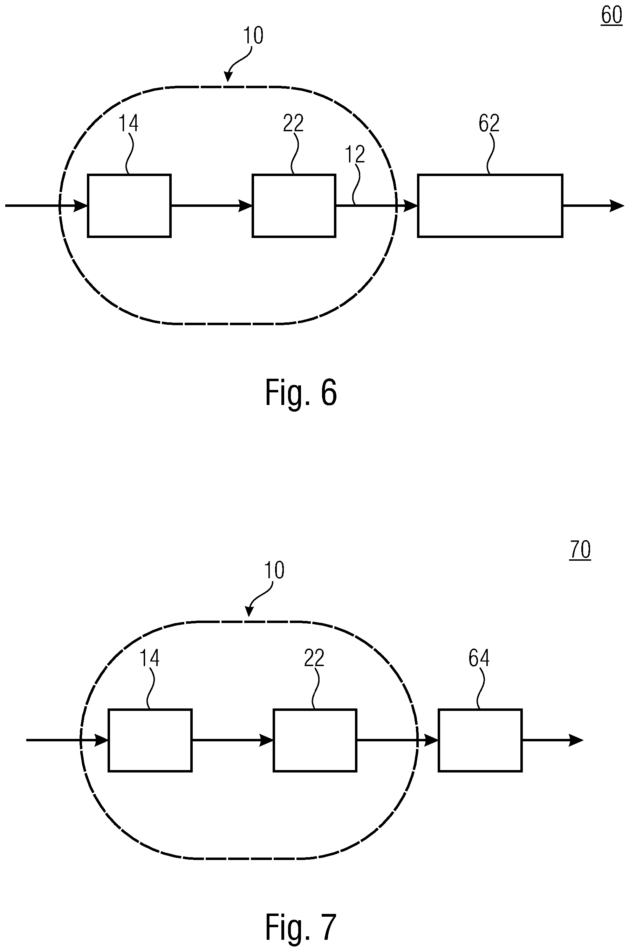

Fig. 6 shows a schematic block diagram of a system 60 according to an embodiment that relates to a control of communication frontends and that may comprise a device 10, or, alternatively or in addition, device 20 and/or 30. The SNN processor of neuromorphic unit 14 is connected to the state machine 22, e.g., comprising a Flip-Flop element. According to any embodiment, a SNN executed on the neuromorphic end 14 can be used to turn a radio unit 62, e.g., a communication frontend, to a state on or a state off. The radio unit 62 may comprise, for example, a receiver and/or transmitter e.g., used for mobile communications or the like. Depending on the communication protocol, the control signal 12 may vary. For example, a PWM signal can be used, and the receiver/transmitter 62 is "on" for the duration of every pulse while it is "off" in the absence of a pulse.

Fig. 7 shows a schematic block diagram of a system 70 according to an embodiment that relates to data packet encoding and that comprises, for example, device 10 whether it may comprise, as an alternative or in addition, device 20 and/or 30. System 70 further comprises a communication channel 64. A SNN processor executed on neuromorphic unit 14 may be connected to the state machine 22. According to an embodiment, the SNN executed on the neuromorphic unit 14 can be used to encode data packets in, e.g., a discrete-valued variable length control signal such as a PWM signal. The encoded data can then be sent via the communication channel 64.

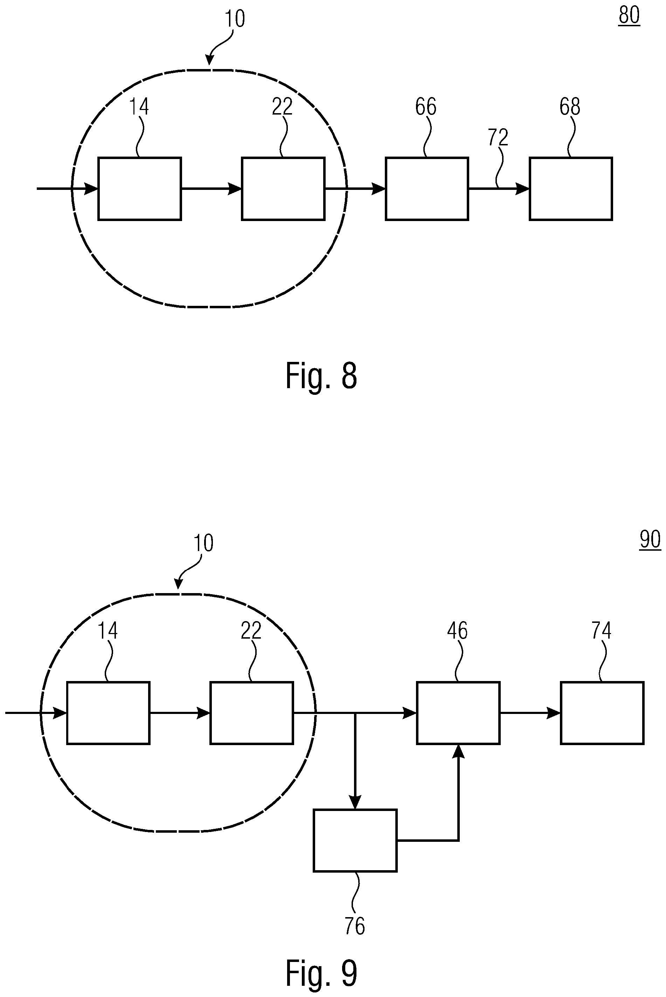

Fig. 8 shows a schematic block diagram of system 80 according to an embodiment. System 80 may comprise device 10 but may comprise, as an alternative or in addition, device 20 and/or 30. System 80 may relate to control of a DC-DC converter.

In other words, the embodiment of Fig. 8 relates to control a DC-DC converter or power converter. A SNN processor of neuromorphic unit 14 is connected to the state machine 22. According to an embodiment, the SNN executed on the neuromorphic unit 14 may be used to control a converter 66, e.g., a buck converter of a boost converter, via PWM signals. The converter 66 may drive some arbitrary load 68 consuming power 72 generated by converter 66. The converter 66 may be isolated or non-isolated.

Fig. 9 shows a schematic block diagram of a system 90 according to an embodiment that comprises device 10 but that may also comprise device 20 and/or device 30. Device 90 may form a part of a class D amplification system.

The SNN processor of neuromorphic unit 14 is connected to the state machine 22, e.g., a Flip-Flop element. According to an embodiment, the SNN executed on the neuromorphic unit 14 can be used to generate discrete-valued variable length control signals such as a PWM signal that gets amplified by a H bridge 46 and, optionally, gets filtered. The resulting analog signal can be used to, e.g., drive an actuator 74 such as a speaker. Drive the H bridge 46, the output signals from state machine 22 may be inverted using an inverter 76, or alternatively, the inverted output from a Flip-Flop circuit may directly be used.

The systems described herein and the devices described herein are illustrated examples of advantageous implementations of the present invention but are not an exhaustive list of implementations. However, they are already indicated the universality of the present invention. In other implementations according to embodiments, the discrete-valued variable length control signal, e.g., bang-bang control signals such as PWM signals may also directly be used to control a load. Such a load may form a control device of a system that also comprises a device according to an embodiment. The controlled device may comprise at least one of a motor, a data encoder, a unit for enabling/disabling operation of an active unit such as an RF front end, an inverter, a filter for filtering the control signal, an actuator such as a speaker or an optical device such as an LED or an LCD.

Embodiments may comprise IO cells with transistors and protective elements, e.g., for protecting against electrostatic discharge, ESD. In some cases, the output transistor of a chip forming at least a part of a device or a system according to an embodiment might be sufficient for the application and additional transistors can be neglected. Alternatively, high current transistors could also be integrated into the chip, like it is common for DC-DC converter chips, class-D amplifiers and/or motor drivers. If the drive current or voltage of the chip are not sufficient to drive the transistor or need to be isolated against the voltage rails of the H-bridge, additional gate-drive circuitry may be necessary and may be integrated or realized by an off-the-shelf components connected to the PWM IO. Not providing an inverted signal might be beneficial to converse chip IO in the latter case, since gate drive circuitry often times generates inverted and non-invented signal from a single non-inverted signal. The state machine according to an embodiment also is not required to be on the neuromorphic chip alternatively, it may be a different element or integrated into a specialized pulse-drive gate drive chip.

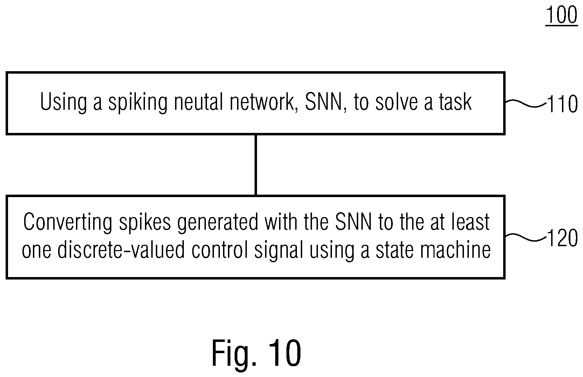

Fig. 10 shows a schematic flowchart of a method 100 according to an embodiment that may be used to generate at least one discrete-valued variable length control signal. Method 100 comprises a step 110 for using a spiking neural network, SNN, to solve a task. A step 120 comprises converting events, spikes respectively generated with the SNN to the at least one discrete-valued variable length control signal using state machine.

Embodiments provides for a compatibility of SNNs with a wide range of classical applications of microcontrollers and application specific integrated circuits, ASICs, with a simple low-complexity implementation. Embodiments therefore open up these applications for intelligent and robust controllers using the neuromorphic processors.

Embodiments solve the efficiency problems of pulse density/frequency signals by creating more efficient discrete-valued variable length signals, especially bang-bang control signal such as PWM. By reducing complexity and allowing for immediate switching of the output signal via a multitude of events in contrast to necessitating the increase or decrease of the output neuron's membrane potential, embodiments may also improve upon the approach of directly using neurons as output of a neuromorphic hardware accelerator. Apart from generating PWM signals, embodiments can be used to generate other kinds of bang-bang control signals or discrete-valued variable length control signals. PWM or bang-bang control signals are used in a board field of applications. Embodiments allow an efficient generation of such signals using neuromorphic hardware. It can therefore be used to develop, e.g., intelligent ultra-low-latency motor drivers for robotic systems and optical elements or to develop SNN communication systems combining both data encoding and activation and deactivation of front ends.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

### References

[1] Y. Stradmann and J. Schemmel, "Closing the loop: High-speed robotics with accelerated neuromorphic hardware," Frontiers in Neuroscience, vol. 18, 2024.
2] M. Jalilian, M. Nouri, A. Ahmadi and N. Kandalaft, "Pulse width modulation (PWM) signals using spiking neuronal networks," in 2017 IEEE International Conference on Signal and Image Processing Applications (ICSIPA), 2017.
[3] H.-H. Lien and T.-S. Chang, "Sparse Compressed Spiking Neural Network Accelerator for Object Detection," IEEE Transactions on Circuits and Systems I: Regular Papers, vol. 69, pp. 2060-2069, 2022.

## Claims

1. A device for providing a control signal based on a task, the device comprising:
a neuromorphic unit (14) to operate a spiking neural network, SNN, (16) configured for providing an event signal (18) based on the task;
a state machine (22; 26) configured for providing at least one discrete-valued variable length control signal (12) based on the event signal (18).

2. The device according to claim 1, wherein the at least one discrete-valued variable length control signal (12) is a pulse-width-modulated, PWM, signal.

3. The device according to claim 1 or 2, wherein the state machine (22; 26) is configured for switching between a plurality of states and for providing the at least one discrete-valued variable length control signal (12) with a plurality of signal amplitudes (L₁, L₂), wherein each signal amplitude (L₁, L₂) of the plurality of signal amplitudes is associated with one of the plurality of states.

4. The device according to one of previous claims, wherein the state machine (22; 26) is configured for switching from a first state to a second state to thereby change an amplitude of the at least one discrete-valued variable length control signal (12) based on the event signal (18); wherein the state machine (22; 26) is configured for operating as a buffer unit for buffering the second state.

5. The device according to one of previous claims, wherein the state machine (22; 26) comprises at least one of:
• a flip-flop unit (26); and
• shift register.

6. The device according to one of previous claims, wherein the state machine (22; 26) is adapted for providing the at least one discrete-valued variable length control signal (12) with a time width (t₂-t₁; t₃-t₂) of a value of the discrete-valued variable length control signal (12) that is associated with a time between events provided by a predefined set of output neurons of the SNN (16) to different inputs of the state machine (22).

7. The device according to previous claims, wherein the SNN (16) comprises a plurality of output neurons (28) , each output neuron configured for providing an event, e.g., firing a spike, at an output (32) of the neuron (28) based on a spiking condition;
wherein a first output (32₁) of a first output neuron (28₁) and a second output (32₂) of a different second output neuron (28₂) are connected with the state machine (22; 26).

8. The device according to claim 7, wherein the first output (32₁) and the second output (32₂) are connected to a same terminal (36₁; 36₂) of the state machine (22; 26) or to different terminals of the state machine (22; 26).

9. The device according to claim 7 or 8, wherein the first output (32₁) is connected to a set terminal (26s) of a flip-flop unit (26) of the state machine (22; 26); wherein a first event (38) received from the first output (32₁) causes a first state of the state machine (22; 26) and a first state of the at least one discrete-valued variable length control signal (12) and wherein a second event received from the second output (32₂) causes a second state of the state machine (22; 26) and a second state of the at least one discrete-valued variable length control signal (12).

10. The device according to one of previous claims, wherein the state machine (22; 26) is one of a plurality of state machines, each state machine (22; 26) of the plurality of state machines configured for receiving events (38) from at least one neuron (28) of the SNN (16).

11. The device according to one of previous claims, wherein the neuromorphic unit (14) and the state machine (22; 26) form at least a part of an integrated circuit.

12. The device according to one of previous claims, wherein the state machine (22; 26) is configured to receive a control signal (52) from a signal source external of the SNN (16) and to provide the at least one discrete-valued variable length control signal (12) based on the control signal (52) and based on the event signal (18).

13. A system comprising:
a device (10; 20; 30) according to one of previous claims; and
a controlled device configured for receiving the at least one discrete-valued variable length control signal (12) and to operate accordingly.

14. The system according to claim 13, wherein the controlled device comprises at least one of:
• a motor (48);
• a data encoder;
• a unit for enabling/disabling operation of an active unit (62);
• an inverter (76);
• a filter for filtering the control signal (12);
• an actuator (74) such as a speaker;
• an optical device

15. Method (100) for generating at least one discrete-valued variable length control signal, the method comprising:
using (110) a spiking neural network, SNN, to solve a task; and
converting (120) events generated with the SNN to the at least one discrete-valued variable length control signal using a state machine.
